# EUROPEAN PATENT SPECIFICATION

(11) **EP 4 199 649 B1**
(45) Date of publication and mention of the grant of the patent: **11.09.2024**
(21) Application number: 22213182.3
(22) Date of filing: 13.12.2022
(51) Int. Cl.: H05B 3/14, H05B 3/42, A24F 40/46

(54) **SURFACE HEATING HEATER PIPE**
HEIZUNGSROHR FÜR OBERFLÄCHENHEIZUNG
TUYAU CHAUFFANT POUR CHAUFFAGE DE SURFACE

(30) Priority: 14.12.2021 KR 20210179082; 11.11.2022 KR 20220150395
(43) Date of publication of application: 21.06.2023
(73) Proprietor: Inno-It Co., Ltd., Busan 48058 (KR)
(72) Inventor: CHAE, Han Seok, 10394 Goyang-si, Gyeonggi-do (KR); SONG, Il Kwon, 16307 Suwon-si, Gyeonggi-do (KR); OH, Young Sun, 10085 Gimpo-si, Gyeonggi-do (KR); OH, Beom Chang, 46246 Geumjeong-gu, Busan (KR)
(74) Representative: Müller Hoffmann & Partner

(56) References cited:
- EP-A1- 0 703 734
- WO-A1-2021/129677
- WO-A1-2021/170758
- KR-A- 20190 010 214
- KR-B1- 102 017 004
- US-A1- 2019 208 815
- US-A1- 2020 128 880

## Description

### TECHNICAL FIELD

The present disclosure relates to a surface heating heater pipe and an aerosol generating device including the same, and more particularly, to a surface heating heater pipe having improved performance by implementing a surface heating structure.

### BACKGROUND ART

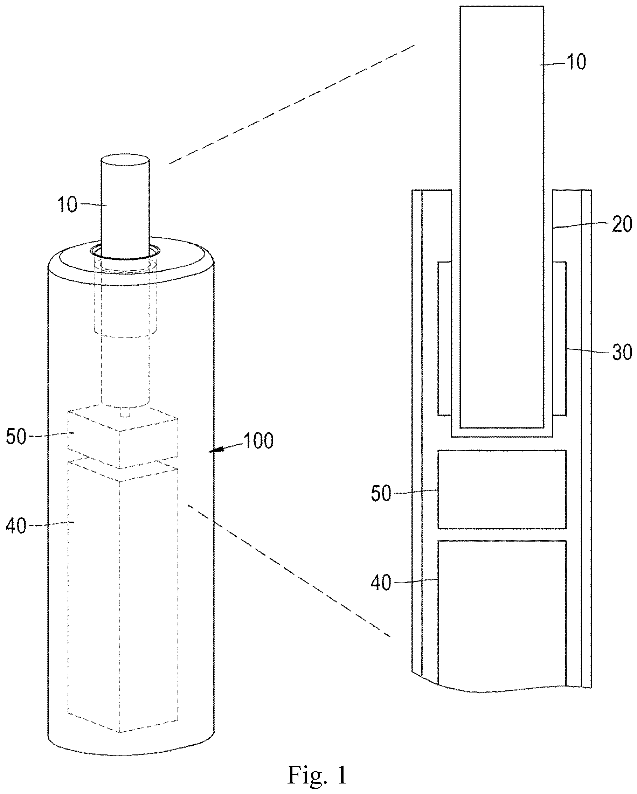

Aerosols are small liquid or solid particles suspended in the air and usually have a size of 0.001 to 1.0 µm. In particular, in some cases, people inhale aerosols derived from various types of cigarette-type aerosol generating articles. For example, according to demand of consumers who prefer cigarette-type conventional cigarettes, electronic cigarettes having a filter portion and a cigarette portion shape of a conventional cigarette have also been proposed, and the electronic cigarettes are configured such that, when an inhalation substance contained in the cigarette portion is vaporized by an electronic heater, users inhale the substance through a filter unit having a configuration equivalent to that of a conventional cigarette. FIG. 1 is a view illustrating an example of an aerosol generating device according to the related art. Referring to FIG. 1, the aerosol generating device 100 includes a cavity 20 into which a cigarette-type aerosol generating article 10 is inserted, and a heater 30 in the form of a pipe is provided on an outer periphery of the cavity 20, for example, to heat the cigarette-type aerosol generating article 10 inserted into the aerosol generating device 100 to generate an aerosol. In addition, the aerosol generating device 100 includes a battery 40 for supplying power to the heater 30 and a controller 50 configured to control power supplied from the battery 40 to the heater 30. In the related art described above, power is supplied from the battery 40 to the heater 30 under the control of the controller 50 and the cigarette-type aerosol generating article 10 is heated by heat generated by the heater 30, so that an aerosol is generated from an aerosol-generating substrate within the cigarette-type aerosol generating article 10.

The heater 30 is a key element directly related to a user experience in the aerosol generating device, and in particular, it is necessary to improve the capability of the heater 30 to transfer heat to the aerosol generating article 10 inserted therein. Therefore, in order to improve a structure of the heater 30, various improvements, such as ceramic heaters or film-type heaters, have been attempted. In addition, since the aerosol generating device is important in portability, there should be no difficulty in long-term use, while the size of the battery is reduced. Therefore, a high-efficiency low-power design is particularly required.

The above objects are solved by the claimed matter according to the independent claims.

### PRIOR ART

Korean Patent Registration No. 10-2017004 discloses a film heater having a nano-carbon particle-based surface heating, but a further improved effect in heating uniformity is required.

WO 2021/170758 A1 discloses a heater assembly for an aerosol generating device comprising: a tubular heating chamber; a flexible thin film heater comprising a heating element track supported on a surface of a flexible electrically insulating backing film; wherein the flexible thin film heater is wrapped around an outer surface of the heating chamber with the backing film toward the heating chamber; and a temperature sensor comprising a temperature sensing element configured to sense a local temperature, wherein the temperature sensing element is positioned so as to overlap with a portion of heating element track.

KR 2019 0010214A relates to a support body including a metal sheet formed in a hollow shape having a predetermined length so that a part of the cigarette having a predetermined length can be inserted therein and an insulating layer formed on one surface of the metal sheet for insulation; an electrode pattern formed on one surface of the insulating layer so as to generate a pattern; and a protective layer having an insulating property and covering the electrode pattern, wherein the insulating layer is an oxide film or a vapor deposition layer.

US 2019/208815 A1 discloses an apparatus arranged to heat smokable material to volatilize at least one component of the smokable material, the apparatus comprising: a housing for receiving smokable material; and at least one heater arranged within the housing for heating smokable material removably received within the housing in use, the heater having a first end and a second end, and a hollow central portion in which smokable material is removably received in use, and being formed from a sheet which is rolled into a tube and sealed along its length to prevent air entering or leaving the heater other than through at least one of the first end or the second end.

EP 0 703 734 A1 concerns a heater for use in a smoking article having a source of electrical energy for heating tobacco flavor medium, the heater comprising: a substrate of electrically conducting material; an electrical insulator deposited on at least a portion of said substrate; and an electrically resistive heater element deposited on said electrical insulator, a first end of said heater element electrically connected to said electrically conducting substrate, wherein a second end of said heater element and a portion of said heater element between the first and second ends of said heater element are electrically insulated from said electrically conducting substrate by said insulator, wherein said substrate and said second end of said heater element are adapted to be electrically connected to the source of electrical energy, wherein a resistive, heating circuit is formed to heat said heating element, which in turn heats the tobacco flavor medium.

WO 2021/129677 A1 discloses a heater which is used to heat an aerosol-forming substrate, and volatilize at least one component in the aerosol-forming substrate to form an aerosol for users to inhale; wherein, the heater comprises: The base body has an inner surface and an outer surface; an infrared radiation layer formed on the surface of the substrate; the infrared radiation layer is used to generate infrared rays and at least radiatively heat the aerosol to form the substrate; the heating element is arranged on the periphery of the base body to receive electric power from the power supply to generate heat, and is configured to transfer the heat to the infrared radiation layer, so that the infrared radiation layer is heated by the heat and the infrared rays are generated.

US 2020/128880 A1 describes a smoking article, comprising: a mouth end portion; and an aerosol generating cartridge in fluid communication with the mouth end portion, and comprising: an enclosure configured to receive an aerosol precursor therein, the aerosol precursor being configured to generate an aerosol in response to heat, at least a portion of the enclosure being permeable such that the aerosol precursor is retained within the enclosure while the aerosol formed from the aerosol precursor is released from the enclosure through the permeable portion upon heating of the enclosure or the aerosol precursor therein.

### DISCLOSURE OF THE INVENTION

An aspect of the present disclosure is to provide a heater pipe capable of generating an aerosol by heating an aerosol-forming article uniformly and at a rapid rate of temperature increase using an exothermic layer, and an aerosol generating device including the same.

The present invention provides a laminated heater pipe for an aerosol generating device for transferring heat to an aerosol-forming article, the heater pipe comprising:
a body formed of metal and having a shape of a hollow pipe for accommodating the aerosol-forming article;
a first insulating layer formed on an outer surface of the body;
an exothermic layer formed on the first insulating layer; and
a second insulating layer formed on the exothermic layer,
wherein an electrode layer is further printed on the first insulating layer, the exothermic layer is a thin film formed on the electrode layer and the first insulating layer by applying a paste composition including at least one of ruthenium, palladium and silver and then sintering.

In another aspect of the embodiment, the exothermic layer may have an electrical resistance of 0.6 Ω to 1.4 Ω.

In another aspect of the embodiment, the electrode layer may include one or more negative (-) electrodes and two or more positive (+) electrodes.

In another aspect of the embodiment, the exothermic layer and the second insulating layer may each have an electrode exposure hole exposing the electrode of the electrode layer, and a wire for applying power may be connected to the electrode.

In another aspect of the embodiment, a temperature change resistance (TCR) of the exothermic layer connected to the electrode layer may be measured and used to control a temperature of the exothermic layer.

In another aspect of the embodiment, the first insulating layer, the electrode layer, the exothermic layer, and the second insulating layer may have a hole located at overlapping positions to expose the heater pipe, wherein the laminated heater pipe further includes a thermocouple for temperature measurement directly welded to the metal body exposed through the hole.

In another aspect of the embodiment, an aerosol generating device may include any one of the heater pipes described above.

In addition, in the heater pipe and the aerosol generating device including the same provided by the present disclosure, a surface heating layer evenly heats a metal pipe and the heated metal pipe heats an aerosol-forming material inserted therein, so that the entire range of the aerosol-forming material may be heated evenly at the same time.

In addition, in the heater pipe and the aerosol generating device including the same provided by the present disclosure, the surface heating layer is also present on a lower surface of the heater pipe, so that the inserted aerosol-forming material may be heated more evenly, and since the surface heating layer and a connector are integrally formed, manufacturing is facilitated.

In addition, the heater pipe and the aerosol generating device including the same provided by the present disclosure may be equipped with a film-type temperature sensor to facilitate temperature control, while maintaining compactness.

### BRIEF DESCRIPTION OF THE DRAWINGS

FIG. 1 is an internal configuration view illustrating an example of an aerosol generating device according to the related art;
FIG. 2 is a partial cross-sectional view of a laminated heater pipe according to a first embodiment of the present disclosure;
FIG. 3 is a perspective view of a laminated heater pipe according to the first embodiment of the present disclosure;
FIG. 4 is an exploded view illustrating each layer of a laminated heater pipe according to the first embodiment of the present disclosure;
FIG. 5 is an exploded view illustrating each layer of a laminated heater pipe according to an second embodiment of the present disclosure;
FIGS. 6 and 7 are perspective views illustrating each layer of a laminated heater pipe according to the second embodiment of the present disclosure;
FIG. 8 is an exploded view illustrating each layer of a laminated heater pipe according to a third embodiment;

### BEST MODE FOR CARRYING OUT THE INVENTION

Hereinafter, the present disclosure will be described in more detail with reference to the drawings.

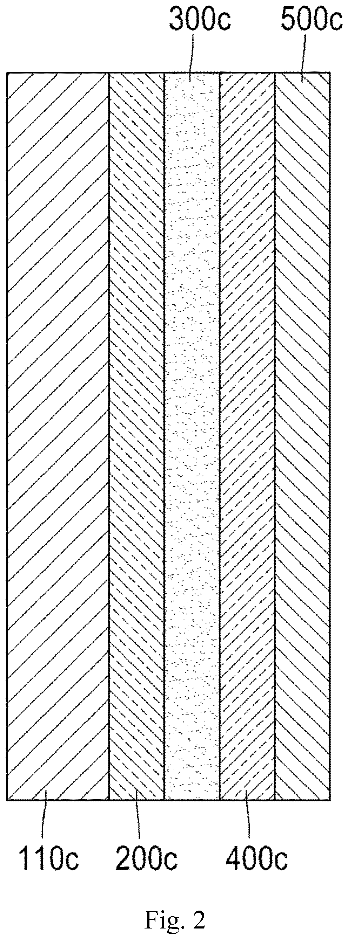

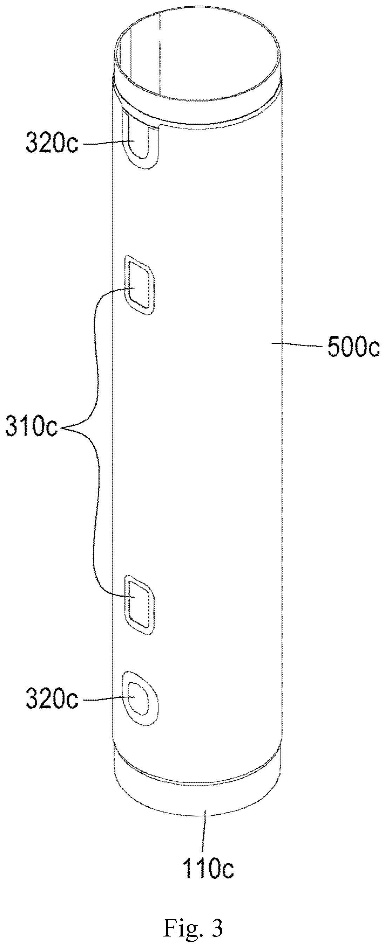

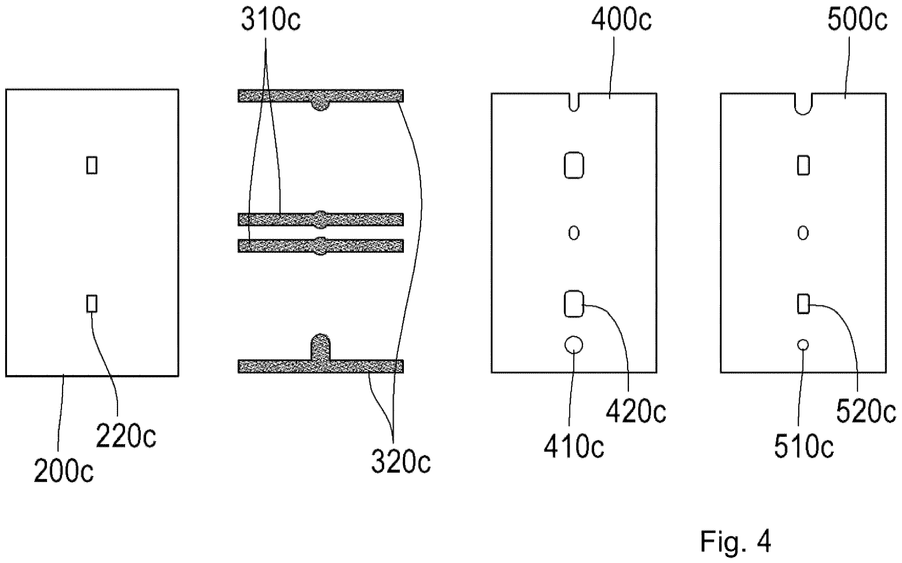

FIG. 2 is a partial cross-sectional view of a laminated heater pipe according to a first embodiment of the present disclosure, FIG. 3 is a perspective view of a laminated heater pipe according to the first embodiment of the present disclosure, and FIG. 4 is an exploded view illustrating each layer of a laminated heater pipe according to the first embodiment of the present disclosure.

In the laminated heater pipe according to the first embodiment, a first insulating layer 200c is formed on an outer surface of a metal body 110c, and an electrode layer 300c is formed thereon. The electrode layer 300c may include electrodes 310c and 320c, which are conductive printed patterns to which a power line is soldered, and a conductive pattern conducting the negative (-) electrode 310c, and the positive (+) electrode 320c.

A thin film 400c is formed on the electrode layer 300c by coating a paste composition including platinum-based ruthenium, palladium, or silver as an exothermic layer and sintering. After the paste composition including platinum-based ruthenium, palladium, or silver is applied on the electrode layer 300c, a second insulating layer 500c is formed, and a heater pipe is manufactured through sintering and compression molding. The thin film 400c generates heat by power applied through the electrode layer 300c, and since the thin film 400c is formed by applying a paste composition, sintering, and compressing, it is light in weight and may be easily manufactured.

At this time, the first insulating layer 200c may be formed of a glass-ceramic layer, the electrodes 310c and 320c may be formed of silver, the thin film 400c may be formed of a composition obtained by mixing silver and palladium or a composition obtained by mixing silver and ruthenium, and the second insulating layer 500c may be formed of a glass layer. At this time, the thin film 400c may have a composition having resistance of 0.6 to 1.4 Ω measured in the electrode layer 300c. For example, the paste composition for forming the thin film 400c may include 10 to 60 parts by weight of silver, 0.25 to 20 parts by weight of palladium, 10 to 40 parts by weight of an organic compound, and 0.01 to 20 parts by weight of others, or may include 10 to 60 parts by weight of silver, 0.25 to 20 parts by weight of ruthenium, 10 to 40 parts by weight of an organic compound, and 0.01 to 20 parts by weight of others.

At this time, the thin film 400c and the second insulating layer 500c include electrode exposure holes 410c and 510c to expose the electrodes 310c and 320c of the electrode layer 300c to solder power lines, respectively.

Meanwhile, in order to control heat generating of the heater pipe, the first insulating layer 200c, the thin film 300c, and the second insulating layer 500c may include holes 220c, 420c, and 520c formed at positions overlapping each other to expose the body 110c to measure a temperature of the body 110c.

A thermocouple (not shown) may be attached to the body 110c exposed through the holes 220c, 420c, and 520c to measure the temperature of the body 110c, and based on the value, a current applied through the electrodes 310c and 320c may be controlled to control a heating value of the heater pipe.

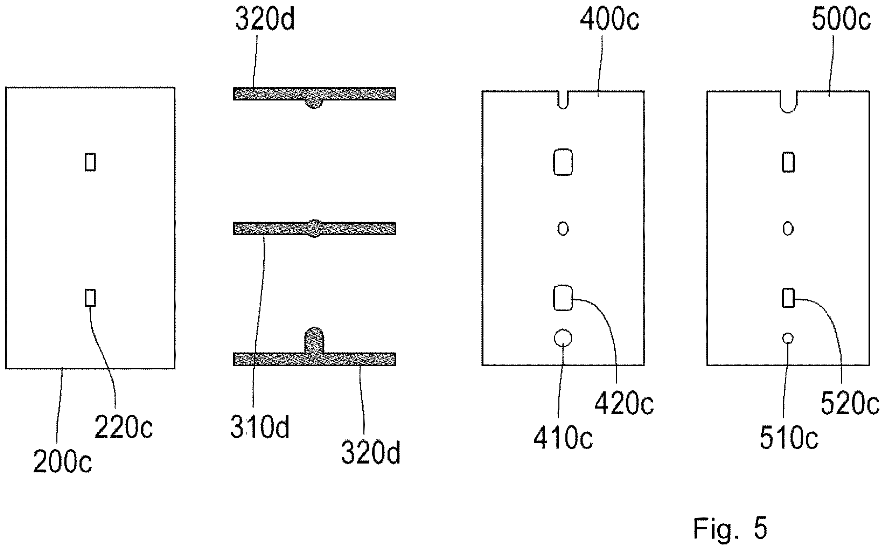

FIG. 5 is an exploded view illustrating each layer of a laminated heater pipe according to a second embodiment of the present disclosure.

The laminated heater pipe according to the second embodiment of the present disclosure has almost the same configuration as that of the first embodiment and differs from the first embodiment only in the number and arrangement of the electrodes 310d and 320d of the electrode layer 300d.

Among the electrodes 310d and 320d of the electrode layer 300d, two positive (+) electrodes 320d are formed, while the negative (-) electrode 310d may be used as a common electrode.

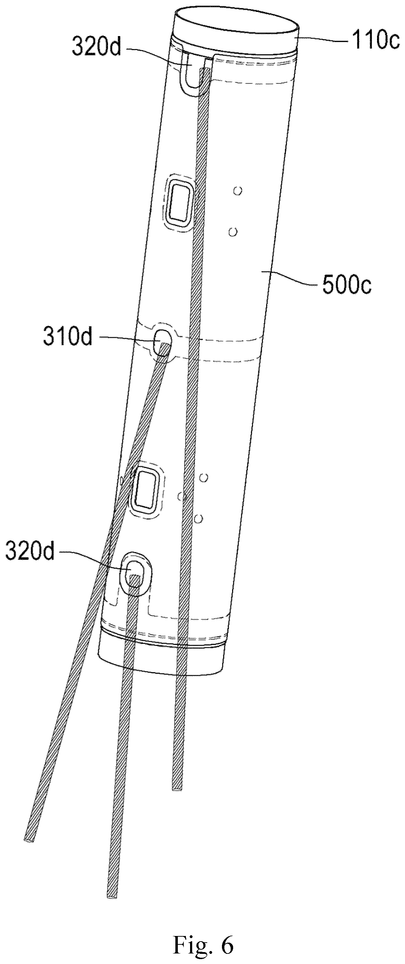

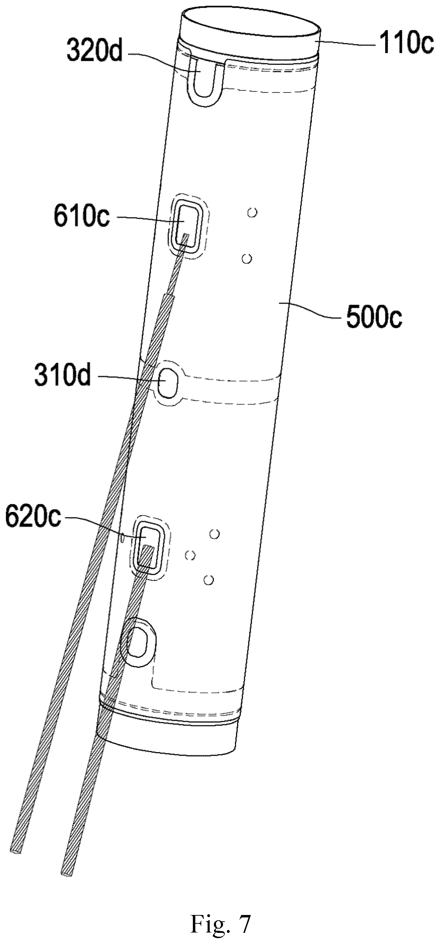

FIGS. 6 and 7 are perspective views of a laminated heater pipe according to the second embodiment of the present disclosure.

Meanwhile, it is illustrated that power supply lines are soldered to the electrodes 310d and 320d of the heater pipe and a thermocouple 610c is attached to the body 110c exposed through the holes 220c, 420c, and 520c (refer to FIG. 5). In order to control heat generating, the first insulating layer 200c, the thin film 300c, and the second insulating layer 500c include holes 220c, 420c, and 520c formed at overlapping positions to expose the body 110c to measure a temperature of the body 110c.

A thermocouple (not shown) may be attached to the body 110c exposed by the holes 220c, 420c, and 520c to measure a temperature of the body 110c, and based on the value, a current applied through the electrodes 310d and 320d may be controlled to control a heating value of the heater pipe.

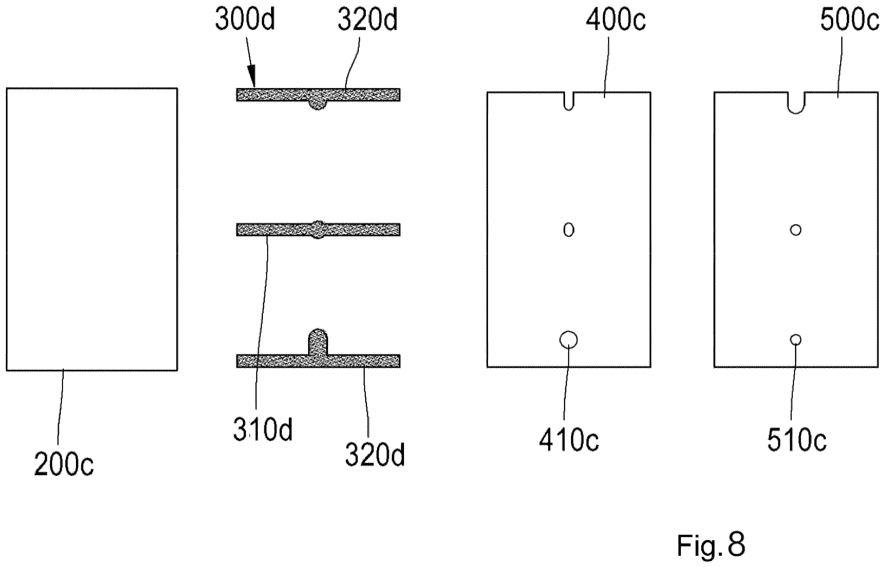

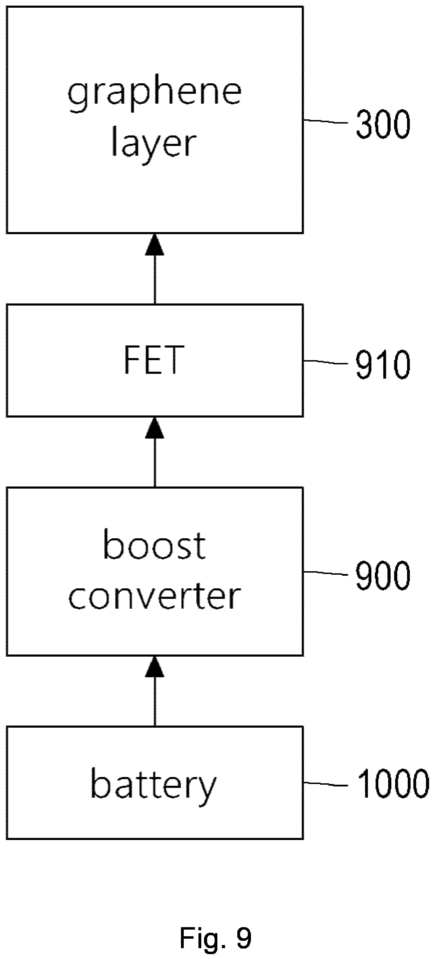

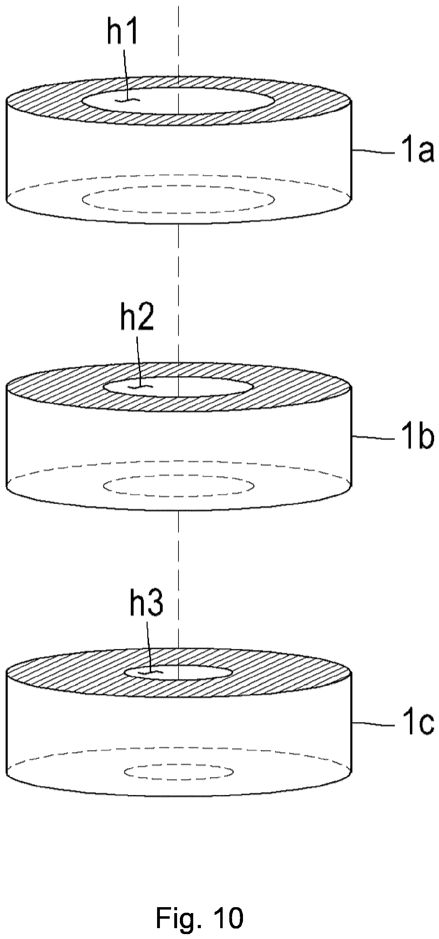

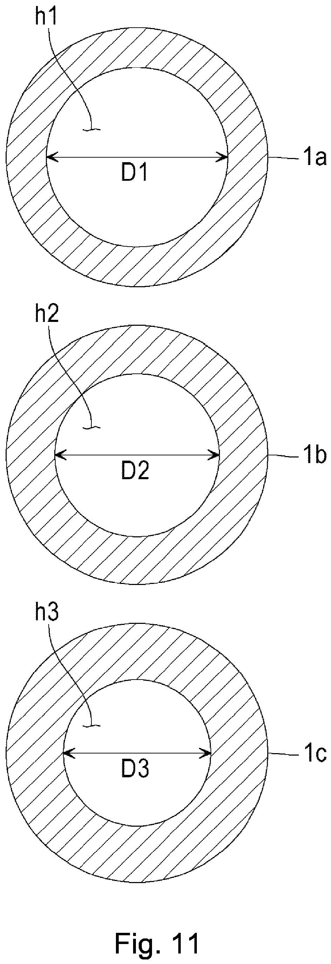

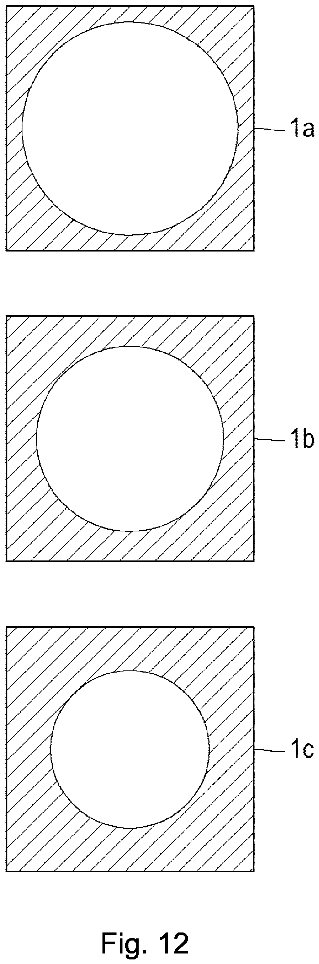

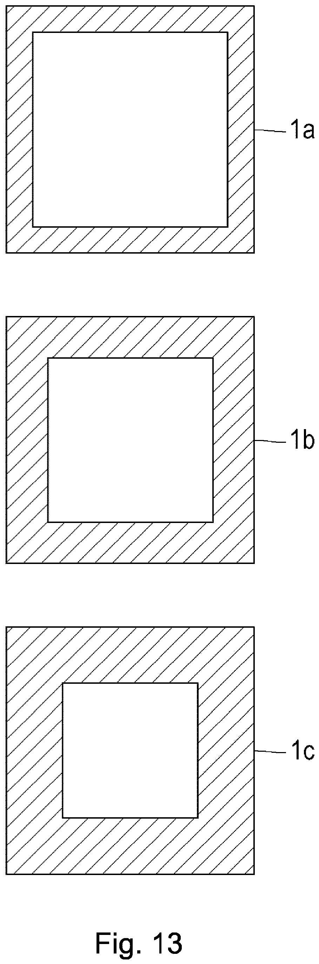

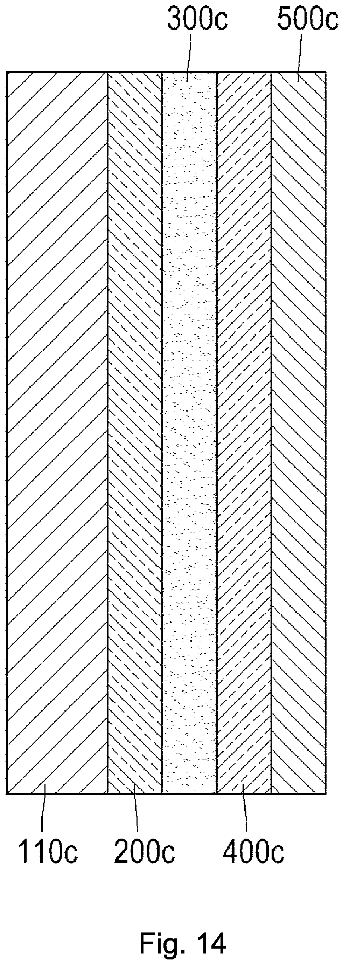

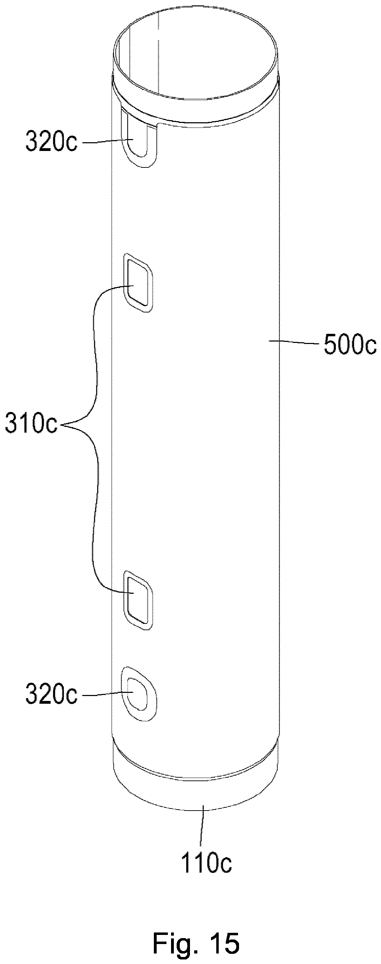

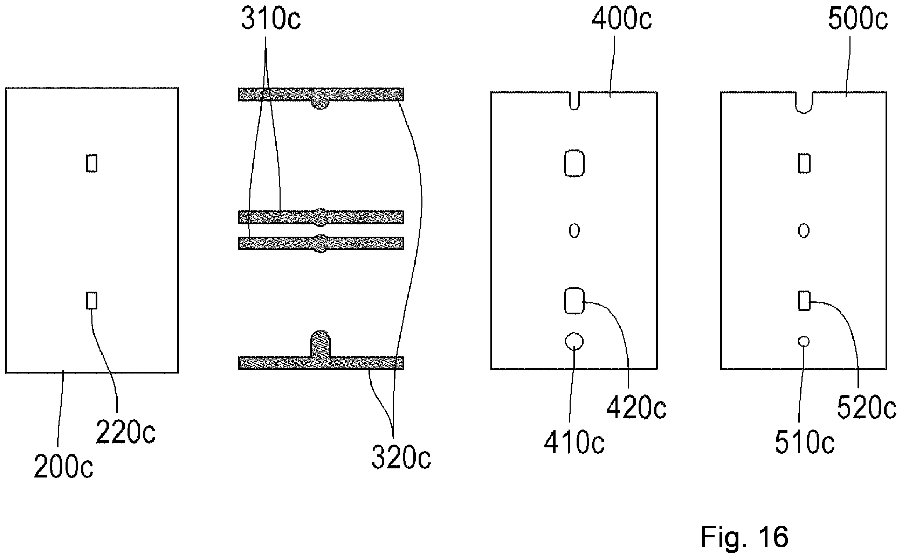

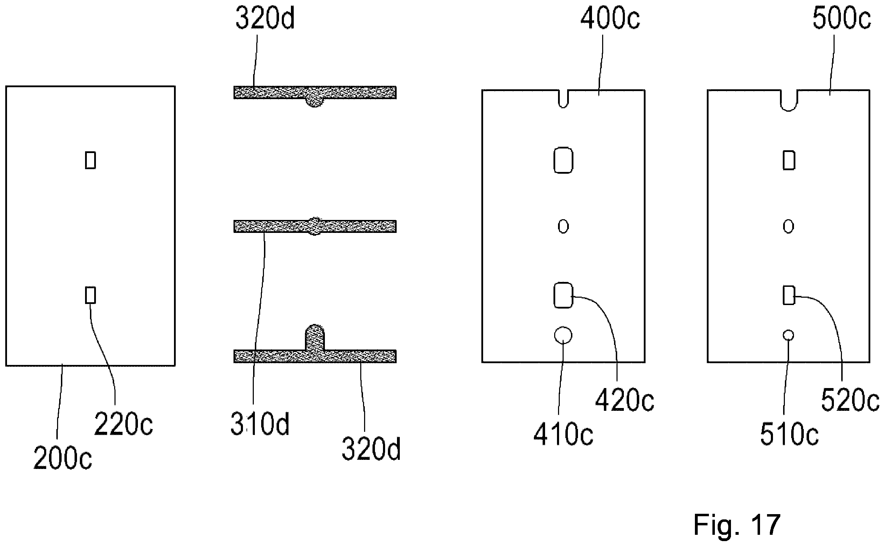

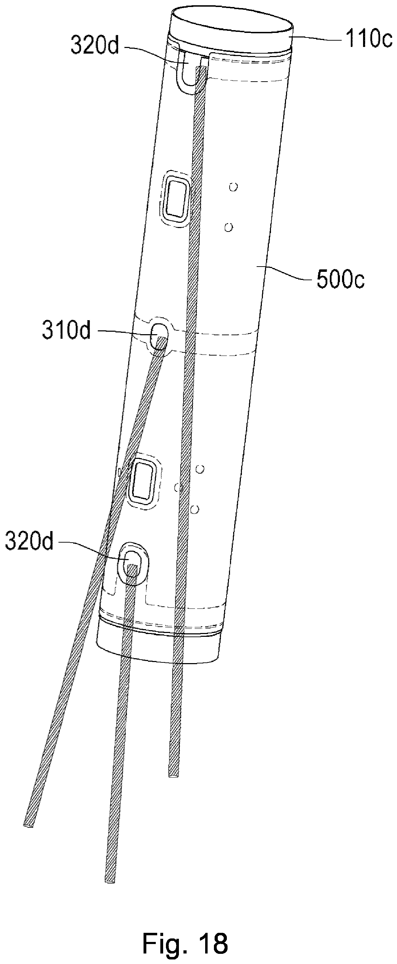

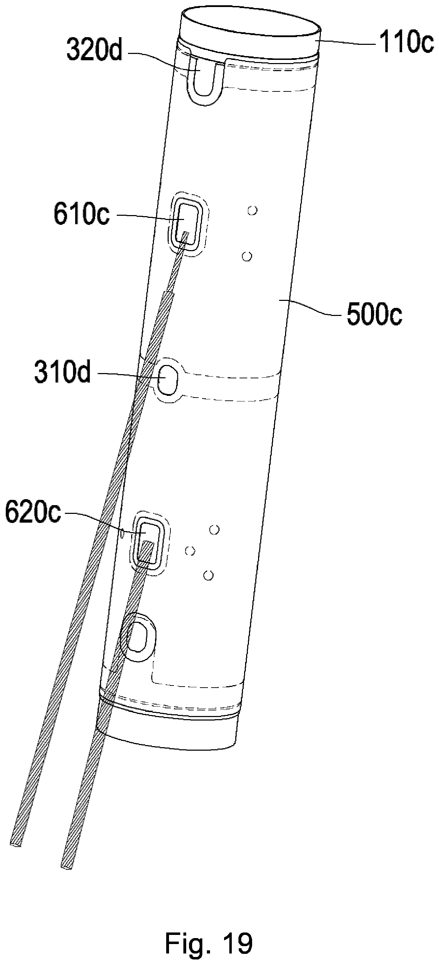

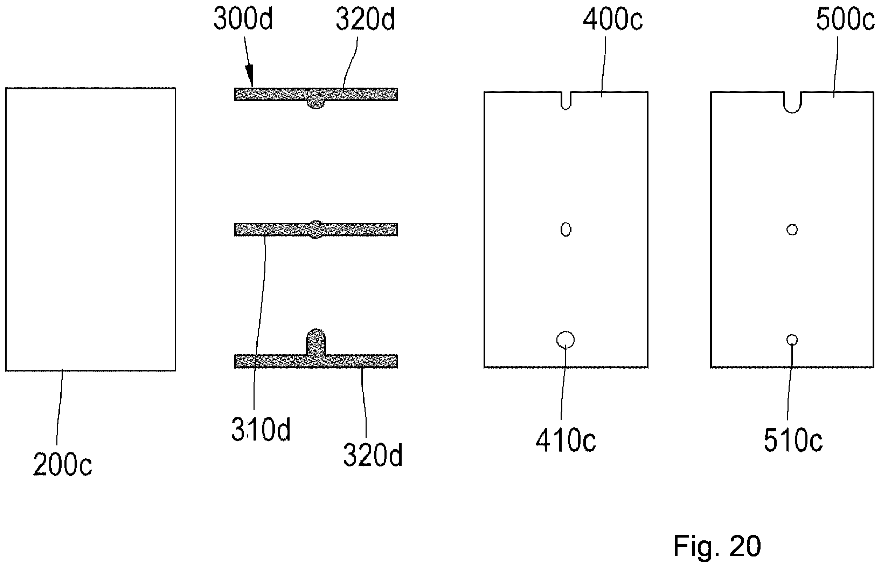

FIG. 8 is an exploded view illustrating each layer of a laminated heater pipe according to a third embodiment.

The laminated heater pipe according to the third embodiment is the same as that of the second embodiment, except that a separate hole for attaching a thermocouple is not formed. Instead, resistance TCR connected to the electrodes 310d and 320d of the electrode layer 300d is measured and used to control the temperature of the heater. When heat is generated by power applied to the electrode layer 300d, a temperature change resistance (TCR) value of the thin film 400c formed of ruthenium, palladium, and silver is used for temperature control.

As described above, the present disclosure is not limited to the specific embodiments described above, and it would be appreciated by those skilled in the art that changes may be made in the aspects without departing from the invention, the scope of which is defined in the claims .

## Claims

1. A laminated heater pipe (1) for an aerosol generating device (100) for transferring heat to an aerosol-forming article, the heater pipe (1) comprising:
a body (110c) formed of metal and having a shape of a hollow pipe for accommodating the aerosol-forming article;
a first insulating layer (200c) formed on an outer surface of the body (110c);
an exothermic layer (400c) and
a second insulating layer (500c) formed on the exothermic layer (440c),
**characterized in that**
an electrode layer (300c) is further printed on the first insulating layer (200c),
the exothermic layer (400c) is a thin film formed on the electrode layer (300c) and the first insulating layer (200c) by applying a paste composition including at least one of platinum-based ruthenium, palladium and/or
silver and then sintering.

2. The laminated heater pipe (1) of claim 1, wherein the first insulating layer (200c) is a glass-ceramic layer formed on the outer surface of the metal body (110).

3. The laminated heater pipe (1) of claim 1 or 2, wherein the electrode layer (300c) formed of silver includes electrodes (310c, 320c) which are conductive printed patterns to which a power line is soldered.

4. The laminated heater pipe (1) of any one of claims 1 to 3, wherein the paste composition is obtained by mixing silver and palladium or by mixing silver and ruthenium.

5. The laminated heater pipe (1) of claim 4, wherein the paste composition has a composition so that the exothermic layer thin film have a resistance of 0.6 to 1.4 Ω measured in the electrode layer (300c).

6. The laminated heater pipe (1) of any one of claims 1 to 5, wherein the second insulating layer (500c) is a glass layer formed on the exothermic layer (400c).

7. The laminated heater pipe (1) of claim 3, wherein the electrode layer (300c) includes one or more negative (-) electrodes (310c) and two or more positive (+) electrodes (320c).

8. The laminated heater pipe (1) of claim 3 or 7, wherein the exothermic layer (400c) and the second insulating layer (500c) each have an electrode exposure hole (410c, 510c) exposing the electrode (310c, 320c) of the electrode layer (300c), and a wire for applying power is connected to the electrode (310c, 320c).

9. The laminated heater pipe (1) of any one of claims 1 to 8, wherein a temperature change resistance (TCR) of the exothermic layer (400c) connected to the electrode layer (300c) is measured and used to control a temperature of the exothermic layer.

10. The laminated heater pipe (1) of any one of claims 1 to 9, wherein
the first insulating layer (200c), the electrode layer (300c), the exothermic layer (400c), and the second insulating layer (500c) have a hole (220c, 420c, 520c) located at overlapping positions to expose the heater pipe (1),
wherein the laminated heater pipe further includes a thermocouple (610c) for temperature measurement directly welded to the metal body (110c) exposed through the hole (220c, 420c, 520c).

## Patentansprüche

1. Laminiertes Heizrohr (1) für eine Aerosolerzeugungsvorrichtung (100) zum Übertragen von Wärme auf einen aerosolbildenden Gegenstand, wobei das Heizrohr (1) Folgendes umfasst:
einen Körper (110c), der aus Metall gebildet ist und die Form eines hohlen Rohrs aufweist, um den aerosolbildenden Gegenstand aufzunehmen;
eine erste Isolierschicht (200c), die auf einer Außenfläche des Körpers (110c) ausgebildet ist;
eine exotherme Schicht (400c); und
eine zweite Isolierschicht (500c), die auf der exothermen Schicht (440c) ausgebildet ist,
**dadurch gekennzeichnet, dass**
eine Elektrodenschicht (300c) auf die erste Isolierschicht (200c) weiter aufgedruckt wird,
die exotherme Schicht (400c) ein dünner Film ist, der auf der Elektrodenschicht (300c) und der ersten Isolierschicht (200c) durch Auftragen einer Pastenzusammensetzung, die Ruthenium und/oder Palladium und/oder Silber auf Platinbasis enthält, und anschließendes Sintern ausgebildet wird.

2. Laminiertes Heizrohr (1) nach Anspruch 1, wobei die erste Isolierschicht (200c) eine Glaskeramikschicht ist, die auf der Außenfläche des Metallkörpers (110) ausgebildet ist.

3. Laminiertes Heizrohr (1) nach Anspruch 1 oder 2, wobei die aus Silber gebildete Elektrodenschicht (300c) Elektroden (310c, 320c) enthält, die gedruckte Leiterbilder sind, an die eine Stromleitung angelötet ist.

4. Laminiertes Heizrohr (1) nach einem der Ansprüche 1 bis 3, wobei die Pastenzusammensetzung durch Mischen von Silber und Palladium oder durch Mischen von Silber und Ruthenium erhalten wird.

5. Laminiertes Heizungsrohr (1) nach Anspruch 4, wobei die Pastenzusammensetzung eine solche Zusammensetzung aufweist, dass der Dünnfilm der exothermen Schicht einen Widerstand von 0,6 bis 1,4 Ω, gemessen in der Elektrodenschicht (300c), aufweist.

6. Laminiertes Heizrohr (1) nach einem der Ansprüche 1 bis 5, wobei die zweite Isolierschicht (500c) eine auf der exothermen Schicht (400c) ausgebildete Glasschicht ist.

7. Laminiertes Heizrohr (1) nach Anspruch 3, wobei die Elektrodenschicht (300c) eine oder mehrere negative (-) Elektroden (310c) und zwei oder mehrere positive (+) Elektroden (320c) enthält.

8. Laminiertes Heizrohr (1) nach Anspruch 3 oder 7, wobei die exotherme Schicht (400c) und die zweite Isolierschicht (500c) jeweils ein Elektrodenfreilegungsloch (410c, 510c) aufweisen, das die Elektrode (310c, 320c) der Elektrodenschicht (300c) freilegt, und ein Draht zum Anlegen von Strom mit der Elektrode (310c, 320c) verbunden ist.

9. Laminiertes Heizrohr (1) nach einem der Ansprüche 1 bis 8, wobei ein Temperaturänderungswiderstand (TCR) der exothermen Schicht (400c), die mit der Elektrodenschicht (300c) verbunden ist, gemessen und zur Steuerung einer Temperatur der exothermen Schicht verwendet wird.

10. Laminiertes Heizungsrohr (1) nach einem der Ansprüche 1 bis 9, wobei die erste Isolierschicht (200c), die Elektrodenschicht (300c), die exotherme Schicht (400c) und die zweite Isolierschicht (500c) ein Loch (220c, 420c, 520c) aufweisen, das an überlappenden Stellen angeordnet ist, um das Heizungsrohr (1) freizulegen,
wobei das laminierte Heizrohr weiter ein Thermoelement (610c) zur Temperaturmessung enthält, das unmittelbar an den Metallkörper (110c) angeschweißt ist, der durch das Loch (220c, 420c, 520c) freigelegt ist.

## Revendications

1. Tuyau chauffant stratifié (1) pour un dispositif de génération d'aérosol (100) pour transférer de la chaleur à un article de formation d'aérosol, le tuyau chauffant (1) comprenant :
un corps (110c) formé de métal et présentant une forme d'un tuyau creux pour loger l'article de formation d'aérosol ;
une première couche isolante (200c) formée sur une surface extérieure du corps (110c) ;
une couche exothermique (400c) et
une seconde couche isolante (500c) formée sur la couche exothermique (440c), **caractérisé en ce que**
une couche d'électrodes (300c) est en outre imprimée sur la première couche isolante (200c),
la couche exothermique (400c) est un film mince formé sur la couche d'électrodes (300c) et la première couche isolante (200c) par application d'une composition de pâte comprenant au moins l'un parmi du ruthénium à base de platine, du palladium et/ou de l'argent puis frittage.

2. Tuyau chauffant stratifié (1) selon la revendication 1, dans lequel la première couche isolante (200c) est une couche vitrocéramique formée sur la surface extérieure du corps métallique (110).

3. Tuyau chauffant stratifié (1) selon la revendication 1 ou 2, dans lequel la couche d'électrodes (300c) formée d'argent comprend des électrodes (310c, 320c) qui sont des motifs imprimés conducteurs sur lesquels une ligne électrique est soudée.

4. Tuyau chauffant stratifié (1) selon l'une des revendications 1 à 3, dans lequel la composition de pâte est obtenue par mélange d'argent et de palladium ou par mélange d'argent et de ruthénium.

5. Tuyau chauffant stratifié (1) selon la revendication 4, dans lequel la composition de pâte présente une composition de sorte que le film mince de couche exothermique présente une résistance de 0,6 à 1,4 Ω mesurée dans la couche d'électrodes (300c).

6. Tuyau chauffant stratifié (1) selon l'une des revendications 1 à 5, dans lequel la seconde couche isolante (500c) est une couche de verre formée sur la couche exothermique (400c).

7. Tuyau chauffant stratifié (1) selon la revendication 3, dans lequel la couche d'électrodes (300c) comporte une électrode négative (-) (310c) ou plus et deux électrodes positives (+) (320c) ou plus.

8. Tuyau chauffant stratifié (1) selon la revendication 3 ou 7, dans lequel la couche exothermique (400c) et la seconde couche isolante (500c) présentent chacune un trou d'exposition d'électrode (410c, 510c) exposant l'électrode (310c, 320c) de la couche d'électrodes (300c), et un fil d'application de puissance est relié à l'électrode (310c, 320c).

9. Tuyau chauffant stratifié (1) selon l'une des revendications 1 à 8, dans lequel une résistance de changement de température (TCR) de la couche exothermique (400c) reliée à la couche d'électrodes (300c) est mesurée et utilisée pour commander une température de la couche exothermique.

10. Tuyau chauffant stratifié (1) selon l'une des revendications 1 à 9, dans lequel la première couche isolante (200c), la couche d'électrodes (300c), la couche exothermique (400c) et la seconde couche isolante (500c) présentent un trou (220c, 420c, 520c) situé à des positions de chevauchement pour exposer le tuyau chauffant (1),
dans lequel le tuyau chauffant stratifié comprend en outre un thermocouple (610c) de mesure de température directement soudé sur le corps métallique (110c) exposé à travers le trou (220c, 420c, 520c).
